# EUROPEAN PATENT APPLICATION

(11) **EP 4 818 115 A1**
(43) Date of publication of application: **07.10.2026**
(21) Application number: 25867307.8
(22) Date of filing: 03.12.2025
(51) Int. Cl.: C01B 25/37, H01M 10/54, H01M 4/58, H01M 4/02

(54) **METHOD FOR PREPARING FEPO4 FROM WASTE LITHIUM IRON PHOSPHATE CATHODE**

(30) Priority: 06.12.2024 KR 20240180051
(71) Applicant: LG Energy Solution, Ltd., Seoul 07335 (KR)
(72) Inventor: KWON, Ohsung, Daejeon 34122 (KR); YU, Hyemin, Daejeon 34122 (KR); KIM, Donghyeon, Daejeon 34122 (KR); NOH, Taechong, Daejeon 34122 (KR); LEE, Dongseok, Daejeon 34122 (KR); LEE, Jeongbae, Daejeon 34122 (KR)
(74) Representative: Hoffmann Eitle
(86) International application number: PCT/KR2025/020536
(87) International publication number: WO 2026/121834

(57) **Abstract**

The present invention relates to a method of preparing FePO₄ from waste lithium iron phosphate cathode. More particularly, the present invention relates to a method of preparing FePO₄ from waste lithium iron phosphate cathode, including step (a) of preparing a hydrogen peroxide mixture by adding an aqueous hydrogen peroxide solution to a solution containing Fe and P components; step (b) of heating the hydrogen peroxide mixture; step (c) of synthesizing FePO₄ by adding an aqueous ammonia solution to the heated hydrogen peroxide mixture; step (d) of separating the synthesized FePO₄; and step (e) of washing FePO₄ with an acidic washing solution having a pH of 1.3 to 1. 6.

According to the present invention, the present invention has an effect of providing a method of preparing FePO₄ from waste lithium iron phosphate cathode, characterized in that impurities derived from waste lithium iron phosphate cathode material are easily removed, and the generation of new by-products is suppressed.

## Description

### [Technical Field]

### [Cross-Reference to Related Application]

This application claims priority to Korean Patent Application No. 10-2024-0180051, filed on December 6, 2024, in the Korean Intellectual Property Office, the disclosure of which is incorporated herein by reference.

The present invention relates to a method of preparing FePO₄ as a precursor of lithium iron phosphate from waste lithium iron phosphate cathode, and more particularly, to a method of preparing FePO₄ from waste lithium iron phosphate cathode, characterized in that impurities derived from waste lithium iron phosphate cathode material are easily removed, and the generation of new by-products is suppressed.

### [Background Art]

The demand for lithium-ion batteries has continuously increased since the 1990s along with the portable electronic device market, and has surged even more globally due to the recent rapid expansion of the electric vehicle market. This may cause instability in the supply of lithium resources in the near future, and continuously accumulating end-of-life waste batteries may also cause significant environmental problems. To solve these problems, the recycling of spent lithium-ion batteries is a very important technical challenge.

Lithium-ion batteries generally consist of a cathode where a cathode active material is coated on a metal foil such as aluminum, an anode where an anode active material is coated on a metal foil such as copper, a separator that prevents the cathode and the anode from coming into contact with each other, and an electrolyte that allows lithium ions to migrate between the cathode and the anode.

The cathode accounts for more than 60% of the cost of a lithium-ion battery, and lithium composite oxides such as lithium cobalt oxide (LiCoO₂), lithium nickel cobalt manganese oxide (LiNiMnCoO₂), lithium manganese oxide (LiMnO₂), or lithium iron phosphate (LiFePO₄) are used as cathode active materials included in such a cathode. As such, since the cathode contains valuable metals, methods for recovering valuable metals from the cathode of waste lithium-ion batteries are attracting significant attention.

Lithium iron phosphate (LiFePO₄) has a very stable hexahedral crystal structure. In order to collapse this stable structure and recover valuable metals, a high concentration of strong acid or strong base is used on the waste cathode to dissolve the valuable metals, and then Li and FePO₄ are recovered respectively.

However, the FePO₄ obtained in the recovery process contains an excessive amount of impurities derived from the waste cathode material and by-products generated during the recovery process, so there is a problem that the battery performance of lithium iron phosphate prepared therefrom deteriorates.

Therefore, there is a need for a method of preparing FePO₄ from waste lithium iron phosphate cathode, in which impurities derived from waste cathode materials are easily removed and the generation of new by-products is suppressed.

### [Related Art Documents]

### [Patent Documents]

KR 2014-0126943 A

### [Disclosure]

### [Technical Problem]

Therefore, the present invention has been made in view of the above problems, and it is one object of the present invention to provide a method of preparing FePO₄ from waste lithium iron phosphate cathode, characterized in that impurities derived from waste cathode material are easily removed, and the generation of new by-products is suppressed.

The above and other objects can be accomplished by the present invention described below.

### [Technical Solution]

I) In accordance with one aspect of the present invention, provided is a method of preparing FePO₄, including (a) preparing a hydrogen peroxide mixture by adding an aqueous hydrogen peroxide solution to a solution containing Fe and P components; (b) heating the hydrogen peroxide mixture; (c) synthesizing FePO₄ by adding an aqueous ammonia solution to the heated hydrogen peroxide mixture; (d) separating the synthesized FePO₄; and (e) washing the separated FePO₄ with an acidic washing solution having a pH of 1.3 to 1.6.
II) According to I), the solution of step (a) may have a pH of 0.1 to 0.5.
III) According to I) or II), in step (a), the aqueous hydrogen peroxide solution may be added in an amount of 0.45 to 1.2 % by volume of the solution based on hydrogen peroxide.
IV) According to I) to III), for the solution in step (a), the aqueous ammonia solution may be added to the solution containing Fe and P components to precipitate impurities, and the impurities may be removed.
V) According to I) to IV), after the addition of the aqueous ammonia solution is completed, the solution containing Fe and P components may have a pH of 1.0 to 1.4.
VI) According to I) to V), the solution of step (a) may be prepared by including (i) obtaining waste cathode material powder by pulverizing and sieving waste lithium iron phosphate cathode; (ii) forming a leachate containing dissolved lithium and a leaching residue by adding the obtained waste cathode material powder to an acidic solution having a molar concentration of 0.5 to 0.7 mol/L, and separating the leachate and the leaching residue; and (iii) obtaining a solution containing Fe and P components by adding the separated leaching residue to an acidic solution having a molar concentration of 0.8 to 1.3 mol/L.
VII) According to I) to VI), in step (b), the hydrogen peroxide mixture may be heated to 28 to 60 °C.
VIII) According to I) to VII), in step (c), after the addition of the aqueous ammonia solution is completed, the heated hydrogen peroxide mixture may have a pH of 1 to 2.
IX) According to I) to VIII), in step (c), stirring may be further performed for 30 to 60 minutes after the addition of the aqueous ammonia solution is completed.
X) According to I) to IX), in step (c), the aqueous ammonia solution may be continuously added.
XI) According to I) to X), based on Equation 1 below, a weight change rate of the FePO₄ washed in step (e) relative to the FePO₄ separated in step (d) may be ±0.3% or less.

   [Equation 1] $Weight change rate \left(%\right) = \left[\left(A-B\right)/\left.A\right)\right] \times 100 ,$
   wherein A is a weight of FePO₄ synthesized in step (d), and B is a weight of FePO₄ washed in step (e).
XII) According to I) to XI), in step (e), a solid-to-liquid ratio of the separated FePO₄ and the acidic washing solution having a pH of 1.3 to 1.6 may be 15 to 25 mL/g.
XIII) According to I) to XII), in step (e), the washing may include adding the acidic washing solution and stirring for 5 to 20 minutes.
XIV) According to I) to XIII), in step (e), the washing may include reduced pressure filtration.
XV) According to I) to XIV), the method of preparing FePO₄ from waste lithium iron phosphate cathode may further include (f) drying the washed FePO₄.
XVI) In accordance with another aspect of the present invention, provided is a method of preparing FePO₄ from waste lithium iron phosphate cathode, including (i) obtaining waste cathode material powder by pulverizing and sieving waste lithium iron phosphate cathode; (ii) forming a leachate containing dissolved lithium and a leaching residue by adding the obtained waste cathode material powder to an acidic solution having a molar concentration of 0.5 to 0.7 mol/L, and separating the leachate and the leaching residue; (iii) obtaining a solution containing Fe and P components by adding the separated leaching residue to an acidic solution having a molar concentration of 0.8 to 1.3 mol/L; (iv) obtaining a solution from which impurities are removed by adding an aqueous ammonia solution to the solution containing Fe and P components to precipitate impurities and removing the impurities; (v) preparing a hydrogen peroxide mixture by adding an aqueous hydrogen peroxide solution to the solution from which impurities are removed; (vi) heating the hydrogen peroxide mixture; (vii) synthesizing FePO₄ by adding an aqueous ammonia solution to the heated hydrogen peroxide mixture; (viii) separating the synthesized FePO₄; (ix) washing the separated FePO₄ with an acidic washing solution having a pH of 1.3 to 1.6; and (x) drying the washed FePO₄.

### [Advantageous Effects]

According to the present invention, the present invention has an effect of providing a method of preparing FePO₄ from waste lithium iron phosphate cathode, characterized in that impurities are easily removed, and the generation of by-products is suppressed.

### [Description of Drawings]

The accompanying drawings illustrate embodiments of the present invention and, together with the detailed description provided below, serve to provide a further understanding of the technical spirit of the present invention. Therefore, the present invention should not be construed as being limited to the matters described in these drawings.
FIG. 1 is a process flow diagram for a method of preparing FePO₄ from waste lithium iron phosphate cathode as an embodiment according to the present invention.
FIG. 2 is a graph showing the removal rate of impurities in a solution containing Fe and P components in Example 1 and Examples 3 to 6 (pH 1.0 to 1.4).
FIG. 3 is a graph showing the content of remaining F, P, Al, and Ti components after removing impurities from a solution containing Fe and P components in Example 1 and Examples 3 to 6 (pH 1.0 to 1.4).
FIG. 4 is a graph measuring the content of remaining Al and Ti components in the final FePO₄ prepared in Example 1 and Examples 3 to 6 (pH 1.0 to 1.4).
FIG. 5 is a graph measuring the Al content in the final FePO₄ prepared in Example 1 and Examples 7 to 15 (pH 1.0 to 1.4 of hydrogen peroxide mixture).
FIG. 6 is a graph measuring the Ti content in the final FePO₄ prepared in Example 1 and Examples 7 to 15 (pH 1.0 to 1.4 of hydrogen peroxide mixture).

### [Best Mode]

The present inventors confirmed that, when waste lithium iron phosphate cathode material powder was separated into a leachate containing a lithium component and a leaching residue containing Fe and P components using an acidic solution, and then an aqueous hydrogen peroxide solution was added to a solution containing Fe and P components obtained by leaching the leaching residue containing Fe and P components with an acidic solution, followed by heating and adding an aqueous ammonia solution to synthesize raw FePO₄, and the synthesized raw FePO₄ was washed with an acidic washing solution having a pH of 1.3 to 1.6, impurities were removed, the generation of by-products was suppressed, and high-yield and high-purity FePO₄ was prepared. Based on these results, the present inventors conducted further studies to complete the present invention.

Hereinafter, a method of recovering lithium of the present invention is described in detail.

The terms and words which are used in the present specification and the appended claims should not be construed as being confined to common meanings or dictionary meanings but should be construed as meanings and concepts matching the technical spirit of the present invention in order to describe the present invention in the best fashion. In addition, since the configurations shown in the examples and drawings of this specification are only embodiments of the present invention, and do not represent all the technical spirit of the present invention, it should be understood that there are many equivalents and variations that may be substituted for the above configurations, and that the present invention may be arranged, substituted, combined, separated, or designed in various other configurations.

Unless otherwise defined, all technical and scientific terms used in this description have the same meaning as commonly understood by those of ordinary skill in the art to which the present invention pertains.

### Method of preparing FePO₄ from waste lithium iron phosphate cathode

A method of preparing FePO₄ from waste lithium iron phosphate cathode of the present invention includes step (a) of preparing a hydrogen peroxide mixture by adding an aqueous hydrogen peroxide solution to a solution containing Fe and P components; step (b) of heating the hydrogen peroxide mixture; step (c) of synthesizing FePO₄ by adding an aqueous ammonia solution to the heated hydrogen peroxide mixture; step (d) of separating the synthesized FePO₄; and step (e) of washing the separated FePO₄ with an acidic washing solution having a pH of 1.3 to 1.6. In this case, impurities may be easily removed, and the generation of new by-products may be suppressed, thereby providing high-yield and high-purity FePO₄.

Hereinafter, each step of the method of preparing FePO₄ from waste lithium iron phosphate cathode is described in detail.

### (a) Preparing a hydrogen peroxide mixture by adding an aqueous hydrogen peroxide solution to a solution containing Fe and P components

The method of preparing FePO₄ from waste lithium iron phosphate cathode of the present invention may include step (a) of preparing a hydrogen peroxide mixture by adding an aqueous hydrogen peroxide solution to a solution containing Fe and P components. In this case, FePO₄ may be easily synthesized.

For example, the solution containing Fe and P components of step (a) may have a pH of 0.1 to 0.5, preferably a pH of 0.2 to 0.4. Within this range, Fe and P components may be easily leached.

For example, the solution containing Fe and P components of step (a) may contain an Fe component in an amount of 23,000 ppm or more, preferably 25,000 ppm or more, more preferably 26,000 ppm or more, still more preferably 27,000 ppm or more, still more preferably 27,000 to 32,000 ppm, still more preferably 27,000 to 30,000 ppm. In this case, high-yield and high-purity FePO₄ may be prepared.

For example, the solution containing Fe and P components of step (a) may contain a P component in an amount of 10,000 ppm or more, preferably 12,000 ppm or more, more preferably 14,000 ppm or more, still more preferably 15,000 ppm or more, still more preferably 15,000 to 20,000 ppm, still more preferably 15,000 to 17,000 ppm. In this case, high-yield and high-purity FePO₄ may be prepared.

For example, the solution containing Fe and P components of step (a) may contain a lithium component in an amount of 500 ppm or less, preferably 400 ppm or less, more preferably 300 ppm or less, still more preferably 250 ppm or less, still more preferably 10 to 250 ppm, still more preferably 100 to 250 ppm. In this case, high-purity FePO₄ may be prepared.

In the present disclosure, ppm is by weight unless otherwise specified.

For example, in step (a), the aqueous hydrogen peroxide solution may be added in an amount of 0.45 to 1.2 % by volume of the solution based on hydrogen peroxide, preferably in an amount of 0.5 to 1.1 % by volume of the solution, more preferably in an amount of 0.6 to 1 % by volume of the solution. Within this range, FePO₄ may be easily synthesized.

For example, the concentration of the aqueous hydrogen peroxide solution may be 25 to 40 % by weight, preferably 27 to 35 % by weight, more preferably 29 to 33 % by weight. Within this range, the generation of by-products may be suppressed, and FePO₄ may be easily synthesized.

For example, the hydrogen peroxide mixture may have a pH of 0.1 to 0.7, preferably a pH of 0.2 to 0.6, more preferably a pH of 0.3 to 0.5. Within this range, the Fe component may be maintained as Fe³⁺ to suppress the generation of by-products while facilitating the synthesis of FePO₄.

For example, for the solution in step (a), the aqueous ammonia solution may be added to the solution containing Fe and P components to precipitate impurities, and the impurities may be removed. In this case, the purity of the prepared FePO₄ may be significantly improved.

For example, after the addition of the aqueous ammonia solution is completed, the solution containing Fe and P components may have a pH of 1.0 to 1.4, preferably a pH of 1.1 to 1.4, more preferably a pH of 1.2 to 1.4. Within this range, impurities may be precipitated and may be easily removed.

In the present disclosure, pH measurement may be performed by a measurement method commonly used in the technical field to which the present invention belongs, and unless otherwise specified, may be measured using a general pH measuring device at room temperature, specifically, using METTLER TOLEDO SevenDirect SD30.

In the present disclosure, room temperature may be a point within the range of 20 ± 5 °C.

For example, the aqueous ammonia solution may have a molar concentration of 0.8 to 1.3 mol/L, preferably a molar concentration of 0.9 to 1.2 mol/L, more preferably a molar concentration of 0.9 to 1.1 mol/L. Within this range, impurities such as aluminum and titanium may be easily precipitated from the solution containing Fe and P components.

For example, the aqueous ammonia solution may be continuously added to the solution containing Fe and P components. In this case, impurities may be sufficiently precipitated and removed.

In the present disclosure, "continuous addition" means that a substance is not "batch added," and for example, refers to addition by drop by drop, little by little, step by step, or continuous flow for 10 minutes or more, preferably 30 minutes or more within the leaching time range.

For example, the aqueous ammonia solution may be added under stirring. In this case, there is an advantage in that the impurity precipitation time is shortened.

For example, reduced pressure filtration may be used to separate the solution to which the aqueous ammonia solution is added from the impurities. In this case, there is an advantage in that the solution and the impurities are easily separated through a simple process alone.

For example, since the separated impurities may include Fe and P components in addition to Al and Ti components, the Fe and P components may be recovered by leaching the separated impurities again in an acidic solution.

For example, the solution of step (a) may be prepared by including step (i) of obtaining waste cathode material powder by pulverizing and sieving waste lithium iron phosphate cathode; step (ii) of forming a leachate containing dissolved lithium and a leaching residue by adding the obtained waste cathode material powder to an acidic solution having a molar concentration of 0.5 to 0.7 mol/L, and separating the leachate and the leaching residue; and step (iii) of obtaining a solution containing Fe and P components by adding the separated leaching residue to an acidic solution having a molar concentration of 0.8 to 1.3 mol/L. In this case, FePO₄ may be synthesized in high yield.

In the present disclosure, the cathode refers to a current collector coated with a cathode active material layer including a cathode active material, a binder, and a conductive material.

In the present disclosure, waste cathode material powder means a material obtained in powder form by pulverizing and sieving a waste cathode, and most of the current collector is removed from the waste cathode, though a small amount of fine current collector particles with a size of several micrometers may be included.

In the present disclosure, the cathode material means a material that includes a cathode active material or is a cathode active material.

For example, the waste lithium iron phosphate cathode may include a cathode active material having an olivine structure. In this case, there are advantages of excellent high-temperature stability, long lifespan characteristics, and low cost.

In the present disclosure, the olivine structure is a type of cathode active material structure with a 3D cubic lattice structure where P-O (phosphorus-oxygen) is strongly bonded. Because the structure may be maintained even when all lithium ions are removed, performance degradation due to charging and discharging is minimal, and thermal stability is excellent. In addition, while the olivine structure is economical because the olivine structure uses inexpensive iron instead of high-priced cobalt metal, the olivine structure has lower energy density compared to other cathode materials and lower electrical conductivity and lithium-ion diffusivity.

The olivine structure may be identified through X-ray diffraction (XRD) analysis.

For example, the cathode active material having an olivine structure may include lithium iron phosphate. In this case, there are advantages of excellent high-temperature stability, long lifespan characteristics, and low cost.

For example, the lithium iron phosphate may be a compound represented by Chemical Formula 1 below. In this case, there are advantages of excellent high-temperature stability, long lifespan characteristics, and low cost.

[Chemical Formula 1] Li₁₊ₐFe_{1-b}M_{b}(PO_{4-c})X_{c}

(In Chemical Formula 1, M includes one or more elements selected from the group consisting of Al, Mg, Ni, Co, Mn, Ti, Ga, Cu, V, Nb, Zr, Ce, In, Zn, and Y; X includes one or more elements selected from the group consisting of F, S, and N; and a, b, and c satisfy - 0.5≤a≤0.5, 0≤b≤0.5, and 0≤c≤0.1, respectively)

The lithium iron phosphate may preferably include LiFePO₄ having an olivine structure. In this case, there are advantages of excellent high-temperature stability, long lifespan characteristics, and low cost.

For example, the cathode of the waste lithium-ion battery may be a discarded lithium-ion battery cathode, a defective product generated during a cathode coating process, or a cathode scrap discarded after cutting an electrode plate, and preferably may be a discarded lithium-ion battery cathode. In this case, there is an eco-friendly and economical advantage of recycling resources by recovering FePO₄ and the like along with expensive lithium.

For example, in step (i), the pulverizing may be performed using dry pulverizing equipment, and specifically, the pulverizing may be performed using a hand-mill, a pin-mill, a disk-mill, a cutting-mill, a hammer-mill, or a blender. In this case, the current collector is finely cut into pieces, and the waste cathode material is separated from the current collector pieces, which provides an advantage in that subsequent processes are easily performed.

For example, the pulverized waste cathode may be obtained as waste cathode material powder through sieving. In this case, the current collector remains on the upper part of a mesh and the waste cathode material is separated by passing through the mesh, which further provides an advantage in that the waste cathode material is obtained as powder of a uniform size.

For example, the sieving may be performed with a sieve of 120 to 250 mesh, preferably 140 to 240 mesh, more preferably 170 to 230 mesh, still more preferably 180 to 210 mesh. In this case, there is an advantage in that the size of the waste cathode material powder is made uniform so that the waste cathode material powder is easily leached in the leaching step, which is a subsequent process.

In the present disclosure, as long as the definition of the present invention is followed, the sieving is not particularly limited when using a method or device defined in the technical field to which the present invention belongs.

For example, in step (ii), the acidic solution may be a solution containing one or more selected from the group consisting of sulfuric acid, hydrochloric acid, hypochlorous acid, nitric acid, carbonic acid, acetic acid, and oxalic acid, and preferably may be a solution containing hydrochloric acid or sulfuric acid. In this case, there is an advantage in that lithium is easily leached and Fe and P components remain as a leaching residue.

The acidic solution may preferably be an acidic aqueous solution. In this case, there is an advantage in that lithium is easily and selectively leached and Fe and P components remain as a leaching residue.

For example, in step (ii), the acidic solution may have an acid concentration of a molar concentration of 0.5 to 0.7 mol/L, preferably 0.55 to 0.65 mol/L. Within this range, there is an advantage in that lithium is easily leached and Fe and P components remain as a leaching residue.

For example, in step (ii), the solid-to-liquid ratio of the cathode powder and the acidic solution may be 7 to 15 mL/g, preferably 8 to 13 mL/g, more preferably 9 to 12 mL/g. Within this range, there is an advantage in that lithium is easily and selectively leached and Fe and P components remain as a leaching residue.

In the present disclosure, the solid-to-liquid ratio refers to the volume of the liquid relative to the weight of the solid, that is, the volume (mL) of the acidic solution relative to the cathode powder content (g).

In the present disclosure, leaching means selectively dissolving metal elements or compounds contained in a solid material using a solvent such as an inorganic acid, an organic acid, or an alkali.

For example, in step (iii), the acidic solution may be a solution containing one or more selected from the group consisting of sulfuric acid, hydrochloric acid, hypochlorous acid, nitric acid, carbonic acid, acetic acid, and oxalic acid, and preferably may be a solution containing hydrochloric acid or sulfuric acid. In this case, there is an advantage in that Fe and P components are easily leached.

The acidic solution may preferably be an acidic aqueous solution. In this case, there is an advantage in that Fe and P components are easily leached.

For example, in step (iii), the acidic solution may have an acid concentration of a molar concentration of 0.8 to 1.3 mol/L, preferably 0.9 to 1.2 mol/L, more preferably 0.9 to 1.1 mol/L. Within this range, there is an economical advantage in that the Fe and P components are sufficiently leached, thereby increasing the yield of FePO₄.

### (b) Heating the hydrogen peroxide mixture

The method of preparing FePO₄ from waste lithium iron phosphate cathode of the present invention may include step (b) of heating the hydrogen peroxide mixture. In this case, FePO₄ may be easily synthesized.

For example, in step (b), the hydrogen peroxide mixture may be heated to 28 to 60 °C, preferably 28 to 55 °C, more preferably 30 to 50 °C, still more preferably 30 to 42 °C. Within this range, FePO₄ may be easily synthesized.

### (c) Synthesizing FePO₄ by adding an aqueous ammonia solution to the heated hydrogen peroxide mixture

The method of preparing FePO₄ from waste lithium iron phosphate cathode of the present invention may include step (c) of synthesizing FePO₄ by adding an aqueous ammonia solution to the heated hydrogen peroxide mixture. In this case, FePO₄ may be synthesized in high yield.

For example, in step (c), after the addition of the aqueous ammonia solution is completed, the hydrogen peroxide mixture may have a pH of 1 to 2, preferably a pH of 1.1 to 1.7, more preferably a pH of 1.2 to 1.5. Within this range, FePO₄ may be synthesized in high yield.

For example, in step (c), the aqueous ammonia solution may be added to the hydrogen peroxide mixture while stirring. In this case, FePO₄ may be easily synthesized.

For example, the stirring speed may be 300 to 700 rpm, preferably 350 to 600 rpm, more preferably 400 to 550 rpm. Within this range, FePO₄ may be easily synthesized.

For example, in step (c), the aqueous ammonia solution may be continuously added. In this case, FePO₄ may be stably synthesized without side reactions.

In step (c), the heated temperature may preferably be maintained while the aqueous ammonia solution is added. In this case, FePO₄ may be stably synthesized without side reactions.

For example, in step (c), after the addition of the aqueous ammonia solution is completed, additional stirring may be performed for 30 to 60 minutes, preferably 35 to 55 minutes, more preferably 40 to 50 minutes. In this case, FePO₄ may be stably synthesized without side reactions.

In step (c), after the addition of the aqueous ammonia solution is completed, the additional stirring may preferably be performed under the heated temperature. In this case, FePO₄ may be stably synthesized without side reactions.

### (d) Separating the synthesized FePO₄

The method of preparing FePO₄ from waste lithium iron phosphate cathode of the present invention may include step (d) of separating the synthesized FePO₄. In this case, impurities may be easily removed in the washing step, which is a subsequent process, and energy may be saved.

For example, the separation may be performed using reduced pressure filtration. In this case, the synthesized FePO₄ may be easily removed.

The reduced pressure filtration may preferably be reduced pressure filtration under vacuum, and specifically, may be reduced pressure filtration under a vacuum using a filtration flask. In this case, FePO₄ may be easily separated.

In the present invention, the reduced pressure filtration under vacuum is not particularly limited as long as the reduced pressure filtration under vacuum is common reduced pressure under vacuum filtration in the technical field to which the present invention belongs, and for example, the reduced pressure filtration under vacuum may include filtration in a partial vacuum state or a low-pressure state.

### (e) Washing the separated FePO₄ with an acidic washing solution having a pH of 1.3 to 1.6

The method of preparing FePO₄ from waste lithium iron phosphate cathode of the present invention may include step (e) of washing the separated FePO₄ with an acidic washing solution having a pH of 1.3 to 1.6. In this case, impurities may be easily removed, and the purity of the synthesized FePO₄ may be increased because by-products due to the re-leaching of FePO₄ are not generated.

For example, the acidic washing solution having a pH of 1.3 to 1.6 may be prepared by mixing distilled water with sulfuric acid, hydrochloric acid, or a mixture thereof, and preferably may be prepared by mixing hydrochloric acid. In this case, the acidic washing solution may be easily prepared and impurities may be easily removed.

The acidic washing solution may have preferably a pH of 1.3 to 1.5, more preferably a pH of 1.3 to 1.4. Within this range, impurities may be easily removed, and the purity of the synthesized FePO₄ may be increased because by-products due to the re-leaching of FePO₄ are not generated.

For example, in step (e), the solid-to-liquid ratio of FePO₄ and the acidic washing solution having a pH of 1.3 to 1.6 may be 15 to 25 mL/g, preferably 17 to 23 mL/g, more preferably 19 to 22 mL/g. Within this range, impurities may be reduced and by-products may not be generated.

For example, in step (e), the washing may be performed by adding the acidic washing solution and stirring for 5 to 20 minutes, preferably 5 to 15 minutes, more preferably 10 to 15 minutes. In this case, impurities may be reduced and by-products may not be generated.

For example, in step (e), the washing may include reduced pressure filtration. In this case, the FePO₄ and the acidic washing solution may be easily separated.

Based on Equation 1 below, the weight change rate of the FePO₄ washed in step (e) relative to the FePO₄ synthesized in step (d) may be, for example, ±0.3% or less, preferably ±0.1 % or less, more preferably ±0.05 % or less, still more preferably ±0.02 % or less. Within this range, FePO₄ may be prepared with high purity and high yield because impurities are removed and by-products are not generated.

In addition, when the conditions of the washing step (e) are adjusted within the weight change rate range, the purity and yield of the prepared FePO₄ may be controlled. [Equation 1] $Weight change rate \left(%\right) = \left[\left(A-B\right)/\left.A\right)\right] \times 100$

(A is the weight of FePO₄ synthesized in step (d), and B is the weight of FePO₄ washed in step (e))

### (f) Drying the washed FePO₄

The method of preparing FePO₄ from waste lithium iron phosphate cathode may further include step (f) of drying the washed FePO₄. In this case, there is an effect of stably transporting and storing the washed FePO₄.

The drying may preferably be vacuum drying, and as a specific example, may be performed in a vacuum state at 70 to 200 °C, more preferably at 80 to 130 °C, until there is no further change in weight, for example, for 1 to 24 hours. Within this range, there is an effect of efficiently removing moisture contained in the washed FePO₄.

In the present invention, the vacuum drying is not particularly limited as long as the vacuum drying is a common vacuum drying in the technical field to which the present invention belongs, and for example, the vacuum drying may include drying in a partial vacuum state or a low-pressure state.

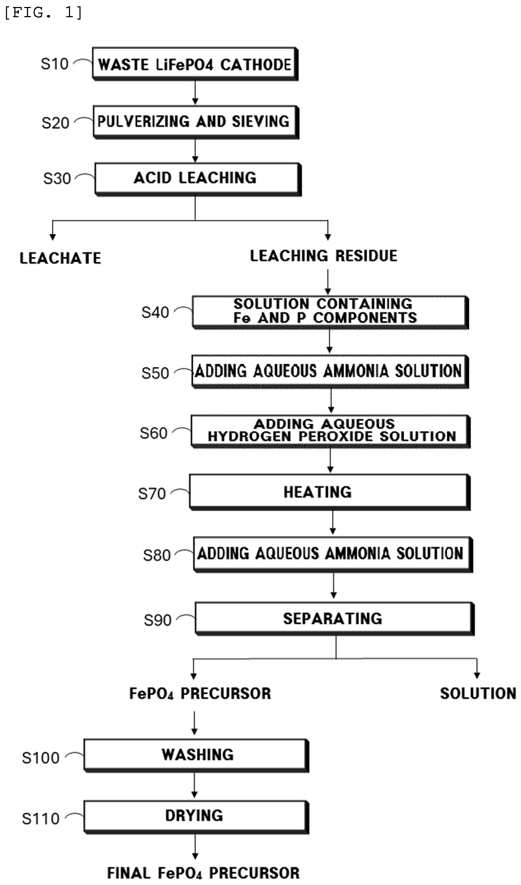

FIG. 1 below is a flowchart for the method of preparing FePO₄ from waste lithium iron phosphate cathode as one embodiment according to the present invention.

Referring to FIG. 1, first, a waste lithium iron phosphate cathode is prepared (step S10).

The waste lithium iron phosphate cathode may preferably be a discarded lithium-ion battery cathode, a defective product generated during a cathode coating process, or a cathode scrap discarded after cutting an electrode plate, more preferably a discarded lithium-ion battery cathode.

The cathode has a structure in which a cathode active material and a conductive material are bonded by a binder on an aluminum foil.

The cathode may include a cathode active material having an olivine structure, preferably may be lithium iron phosphate having an olivine structure, and more preferably may be LiFePO₄ having an olivine structure. In this case, there are advantages of excellent high-temperature stability, long lifespan characteristics, and low cost.

Next, waste cathode material powder is obtained by pulverizing and sieving the waste lithium iron phosphate cathode (step S20).

The pulverizing may be performed using dry pulverizing equipment, specifically using a hand-mill, a pin-mill, a disk-mill, a cutting-mill, a hammer-mill, or a blender, as a specific example, a blender. In this case, the current collector is finely cut into pieces, and the cathode material is separated from the current collector pieces. In this case, the current collector and the cathode material may be easily separated.

For example, the current collector may be separated from the pulverized waste cathode through sieving, and the waste cathode material powder of a uniform size may be obtained.

The sieving may preferably be performed with a sieve of 120 to 250 mesh, as a specific example, a sieve of 200 mesh. In this case, the current collector is separated, and the waste cathode material powder of a uniform size may be obtained.

Next, a leachate containing dissolved lithium and a leaching residue are formed and separated by adding the waste cathode material powder to an acidic solution having a molar concentration of 0.5 to 0.7 mol/L (step S30).

For example, the acidic solution may be a solution containing at least one selected from the group consisting of sulfuric acid, hydrochloric acid, hypochlorous acid, nitric acid, carbonic acid, acetic acid, and oxalic acid, and specifically may be an aqueous sulfuric acid solution. In this case, there is an advantage in that lithium is easily and selectively leached and Fe and P components remain as a leaching residue.

The acidic solution may preferably be an acidic aqueous solution. In this case, there is an advantage in that lithium is easily and selectively leached and Fe and P components remain as a leaching residue.

The acidic solution may preferably have an acid concentration of 0.55 to 0.65 mol/L, as a specific example, 0.6 mol/L. In this case, lithium is easily and selectively leached and Fe and P components remain as a leaching residue.

In step S30, the solid-to-liquid ratio of the waste cathode material powder and the acidic solution may preferably be 7 to 15 mL/g, as a specific example, 10 mL/g. In this case, there is an advantage in that lithium is sufficiently leached, while the Fe and P components are not leached and remain as the leaching residue.

Next, a solution containing Fe and P components is obtained by adding the separated leaching residue to an acidic solution having a molar concentration of 0.8 to 1.3 mol/L (step S40).

For example, the acidic solution may be a solution containing one or more selected from the group consisting of sulfuric acid, hydrochloric acid, hypochlorous acid, nitric acid, carbonic acid, acetic acid, and oxalic acid, and specifically may be an aqueous sulfuric acid solution. In this case, Fe and P components may be leached.

The acidic solution may preferably be an acidic aqueous solution. In this case, Fe and P components may be leached.

The acidic solution may preferably have an acid concentration of 0.9 to 1.2 mol/L, as a specific example, 1.0 mol/L. In this case, there is an economical advantage in that the Fe and P components are sufficiently leached, thereby increasing the yield of FePO₄.

The solution containing Fe and P components may preferably have a pH of 0.1 to 0.5, as a specific example, a pH of 0.2 to 0.4. Within this range, there is an advantage in that the Fe and P components exist in a leached state.

Next, an aqueous ammonia solution is added to the solution containing Fe and P components (step S50).

In step S50, the purity of the prepared FePO₄ may be significantly improved by adding the aqueous ammonia solution to the solution containing Fe and P components to precipitate and remove impurities.

For example, the solution containing Fe and P components may include the Fe component in an amount of 23,000 ppm or more, as a specific example, 27,000 ppm or more. In this case, high-yield and high-purity FePO₄ may be prepared.

For example, the solution containing Fe and P components may include the P component in an amount of 10,000 ppm or more, as a specific example, 15,000 ppm or more. In this case, high-yield and high-purity FePO₄ may be prepared.

For example, the solution containing Fe and P components may include a lithium component in an amount of 500 ppm or less, as a specific example, 250 ppm or less. In this case, high-purity FePO₄ may be prepared.

The aqueous ammonia solution may preferably have a molar concentration of 0.8 to 1.3 mol/L, as a specific example, 1.0 mol/L. In this case, impurities such as aluminum and titanium are precipitated and easily removed.

After the addition of the aqueous ammonia solution is completed, the solution may preferably have a pH of 1.0 to 1.4, as a specific example, a pH of 1.2. In this case, impurities such as aluminum and titanium are precipitated and easily removed.

The aqueous ammonia solution may be continuously added to the solution. In this case, impurities such as aluminum and titanium are precipitated and easily removed.

For example, the aqueous ammonia solution may be added under stirring. In this case, there is an advantage in that the impurities are precipitated within a short time.

The separation of the impurities from the solution to which the aqueous ammonia solution is added may preferably use reduced pressure filtration. In this case, the solution and the impurities may be easily separated through a simple process alone.

Next, a hydrogen peroxide mixture is prepared by adding an aqueous hydrogen peroxide solution to the solution containing Fe and P components from which impurities have been separated (step S60).

In step S60, the aqueous hydrogen peroxide solution may preferably be added in an amount of 0.45 to 1.2 % by volume of the solution based on hydrogen peroxide, as a specific example, in an amount of 0.6 to 1.0 % by volume of the solution. In this case, FePO₄ may be easily synthesized.

The aqueous hydrogen peroxide solution may preferably have a concentration of 25 to 40 % by weight, as a specific example, 30 % by weight. In this case, the Fe component may be maintained as Fe³⁺ to suppress the generation of by-products while facilitating the synthesis of FePO₄.

Next, the hydrogen peroxide mixture is heated (step S70).

The hydrogen peroxide mixture may be heated to preferably 28 to 60 °C, as a specific example, 30 °C. In this case, FePO₄ may be easily synthesized.

Next, FePO₄ is synthesized by adding the aqueous ammonia solution to the heated hydrogen peroxide mixture (step S80).

After the addition of the aqueous ammonia solution to the heated hydrogen peroxide mixture is completed, the pH may preferably be 1 to 2, as a specific example, pH 1.2. In this case, FePO₄ may be synthesized in high yield.

In step S80, the aqueous ammonia solution may preferably be added while stirring, and more preferably may be added while stirring at 300 to 700 rpm, as a specific example, while stirring at 500 rpm. In this case, FePO₄ may be synthesized in high yield.

In step S80, the aqueous ammonia solution may preferably be continuously added. In this case, FePO₄ may be stably synthesized without side reactions.

While the aqueous ammonia solution is added, the heated temperature may preferably be maintained. In this case, FePO₄ may be stably synthesized without side reactions.

In step S80, after the addition of the aqueous ammonia solution is completed, additional stirring may preferably be performed for 30 to 60 minutes, as a specific example, for 40 minutes. In this case, FePO₄ may be stably synthesized without side reactions.

In step S80, after the addition of the aqueous ammonia solution is completed, the additional stirring may be performed under the heated temperature. In this case, the synthesis of FePO₄ may be stably achieved without side reactions.

Next, the synthesized FePO₄ is separated (step S90).

In step S80, by separating the synthesized FePO₄, impurities may be easily removed in the washing step, which is a subsequent process, and energy may be saved.

The separation may preferably be performed using reduced pressure filtration, more preferably reduced pressure filtration under vacuum, specifically reduced pressure filtration under vacuum using a filtration flask. In this case, FePO₄ may be easily removed.

Next, the separated FePO₄ is washed with an acidic washing solution having a pH of 1.3 to 1.6 (step S100).

Through the washing step, impurities such as FeₓPOₓ, which is FePO₄ with an inconsistent stoichiometric ratio, may be easily removed and the purity of the synthesized FePO₄ may be increased because by-products are not generated.

As a specific example, the acidic washing solution having a pH of 1.3 to 1.6 may be a mixture of distilled water and hydrochloric acid, sulfuric acid, or a mixture thereof, as a specific example, a mixture of distilled water and hydrochloric acid. In this case, the acidic washing solution may be easily prepared and impurities may be easily removed.

As a specific example, the acidic washing solution may have a pH of 1.3 to 1.5. In this case, impurities may be easily removed, and the purity of the synthesized FePO₄ may be increased because by-products due to the re-leaching of FePO₄ are not generated.

In step S100, the solid-to-liquid ratio of the FePO₄ and the acidic washing solution may preferably be 15 to 25 mL/g, as a specific example, 20 mL/g. In this case, the generation of by-products may be suppressed, and impurities such as FeₓPOₓ, which is FePO₄ with an inconsistent stoichiometric ratio, may be easily removed. In addition, since by-products are not generated, the purity of the synthesized FePO₄ may be increased.

In step S100, the washing may be performed by adding the acidic washing solution and stirring preferably for 5 to 20 minutes, as a specific example, for 10 minutes. In this case, impurities may be reduced and by-products may not be generated.

In step S100, the washing may preferably include reduced pressure filtration. In this case, the FePO₄ and the acidic washing solution may be easily separated.

Based on Equation 1 below, the weight change rate of the FePO₄ synthesized in step S80 relative to the FePO₄ washed in step S100 may be ±0.3% or less, as a specific example, ±0.02 % or less. Within this range, impurities may be reduced and by-products may not be generated, resulting in excellent battery performance. [Equation 1] $Weight change rate \left(%\right) = \left[\left(A-B\right)/\left.A\right)\right] \times 100$

(A is the weight of the synthesized FePO₄ obtained in step S80, and B is the weight of the washed FePO₄ obtained in step S100)

Next, the washed FePO₄ is dried (step S110).

Step S110 may further include a step of drying the washed FePO₄. In this case, there is an effect of stably transporting and storing the washed FePO₄.

The drying may preferably be vacuum drying, more preferably may be performed in a vacuum state at 70 to 200 °C until there is no further change in weight, and as a specific example, may be performed at 80 to 130 °C for 1 to 24 hours. Within this range, there is an effect of efficiently removing moisture contained in the washed FePO₄.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### [Example I: Weight change rate according to the pH of the acidic washing solution]

### Example 1

Waste lithium iron phosphate cathode was pulverized with a blender to separate a current collector. The waste lithium iron phosphate cathode material, from which the current collector was separated, was sieved with a 200-mesh sieve to obtain waste cathode material powder having an olivine structure. As a result of X-ray diffraction (XRD) analysis of the obtained waste cathode material powder, the powder was confirmed to have an olivine structure.

100 g of the prepared waste cathode material powder was added to 1,000 mL of an aqueous sulfuric acid solution having a molar concentration of 0.6 mol/L at room temperature and leached to form a leachate containing dissolved lithium and a leaching residue. The leachate and the leaching residue were separated by reduced pressure filtration to obtain the leaching residue. Components such as Li, Fe, P, and S in the obtained leaching residue were measured through ICP analysis, and the results are shown in Table 1 below.

The obtained leaching residue was leached in an aqueous sulfuric acid solution having a molar concentration of 1 mol/L at room temperature at a solid-to-liquid ratio of 10 mL/g for 20 hours to obtain a solution containing Fe and P components. The solution had a pH of 0.1 to 0.5 and contained 27,000 ppm of an Fe component and 15,000 ppm of a P component, which was confirmed through ICP analysis.

50 mL of the solution containing Fe and P components was taken, and an aqueous ammonia solution having a molar concentration of 1 mol/L was continuously added at a rate of 1 mL/min while stirring at room temperature so that the pH of the solution reached 1.2, thereby precipitating impurities such as aluminum and titanium.

The solution in which impurities such as aluminum and titanium were precipitated was separated by reduced pressure filtration to remove the impurities.

An aqueous hydrogen peroxide solution (concentration of 30 % by weight) was added to 50 mL of the solution from which the impurities were removed in an amount of 0.6% by volume of the solution based on hydrogen peroxide, and the temperature was increased to 30 °C to prepare a hydrogen peroxide mixture. At this time, the process was performed under stirring at 500 rpm.

An aqueous ammonia solution having a molar concentration of 1 mol/L was continuously added to the heated hydrogen peroxide mixture at a rate of 0.1 mL/min so that the pH of the mixture was maintained at 1.2, thereby synthesizing FePO₄. At this time, the mixture was stirred at 500 rpm.

The synthesized FePO₄ and the mixture were separated using reduced pressure filtration.

The separated FePO₄ was mixed with an acidic solution (washing solution) having a pH of 1.3 prepared with distilled water and hydrochloric acid, and washed for 10 minutes by stirring at 500 rpm.

After the washing, the FePO₄ and the washing solution were separated using reduced pressure filtration to obtain washed FePO₄.

The washed FePO₄ was vacuum-dried at 80 °C to obtain final FePO₄.

### Example 2

The same process as in Example 1 was performed, except that the FePO₄ separated after the synthesis was washed by mixing the separated FePO₄ with an acidic solution (washing solution) having a pH of 1.5 prepared with distilled water and hydrochloric acid.

### Comparative Example 1

The same process as in Example 1 was performed, except that the FePO₄ separated after the synthesis was washed by mixing the separated FePO₄ with an acidic solution (washing solution) having a pH of 1.0 prepared with distilled water and hydrochloric acid.

### Comparative Example 2

The same process as in Example 1 was performed, except that the FePO₄ separated after the synthesis was washed by mixing the separated FePO₄ with an acidic solution (washing solution) having a pH of 1.2 prepared with distilled water and hydrochloric acid.

### Comparative Example 3

The same process as in Example 1 was performed, except that the FePO₄ separated after the synthesis was washed by mixing the separated FePO₄ with an acidic solution (washing solution) having a pH of 1.7 prepared with distilled water and hydrochloric acid.

### Comparative Example 4

The same process as in Example 1 was performed, except that the FePO₄ separated after the synthesis was washed by mixing the separated FePO₄ with an acidic solution (washing solution) having a pH of 2.0 prepared with distilled water and hydrochloric acid.

### Comparative Example 5

The same process as in Example 1 was performed, except that the FePO₄ separated after the synthesis was washed by mixing the separated FePO₄ with an acidic solution (washing solution) having a pH of 6.0 prepared with distilled water and hydrochloric acid.

### [Test Example I: Leaching residue components]

* ICP analysis: 0.2 g of the leaching residue was collected and placed in a conical tube, and the exact weight was measured. Next, 0.1 mL of nitric acid with a concentration of 70 % was added thereto, followed by the addition of 500 µL of 1000 g/kg internal STD (Sc), and the mixture was diluted with ultrapure water to a volume of 50 mL and measured by ICP. The results are shown in Table 1 below.

**[Table 1]**

| Sample | wt% | | | **ppm** | | | | | | | | | |
|---|---|---|---|---|---|---|---|---|---|---|---|---|---|
| | **Fe** | **P** | **S** | **Li** | **Al** | **Ti** | **Na** | **K** | **Cr** | **Ni** | **Co** | **Mn** | **Ca** |
| Leaching residue | 36.8 | 19.5 | - | 235 | 1550 | 1530 | - | - | - | 65 | 10 | 80 | 20 |

As shown in Table 1, the leaching residue, which was separated after leaching the waste cathode material powder obtained by pulverizing and sieving the waste lithium iron phosphate cathode in an aqueous sulfuric acid solution having a molar concentration of 0.6 mol/L, was mostly composed of Fe and P components. Among the elements included in small amounts, it was confirmed that the lithium component was present in a relatively small amount, while aluminum and titanium components were included in relatively large amounts.

### [Test Example II: Weight change rate of FePO₄ according to the pH of the acidic washing solution]

* Weight change rate (%): The weight change rate of the washed FePO₄ was calculated from the weight of the synthesized FePO₄ based on Equation 1 below. [Equation 1] $Weight change rate \left(%\right) = \left[\left(A-B\right)/\left.A\right)\right] \times 100$

(A is the weight of the synthesized FePO₄, and B is the weight of the washed FePO₄)

**[Table 2]**

| No. | pH of washing solution | Weight change rate (%) |
|---|---|---|
| Example 1 | 1.3 | 0 |
| Example 2 | 1.5 | +0.01 |
| Comparative Example 1 | 1.0 | -30.2 |
| Comparative Example 2 | 1.2 | -10.6 |
| Comparative Example 3 | 1.7 | +1.3 |
| Comparative Example 4 | 2 | +2.8 |
| Comparative Example 5 | 6 | +4.2 |

As shown in Table 2, in Examples 1 and 2 where the pH of the acidic washing solution was within the range of 1.3 to 1.6, the weight change rate was ±0.3% or less, showing almost no change, which indicated that by-products were not generated. However, it was confirmed that in Comparative Examples 1 to 5, where the pH was outside of this range, the absolute value of the weight change rate was large. Additionally, when the pH of the acidic washing solution is less than the range of the present invention, the washed FePO₄ is re-leached, resulting in a negative (-) weight change rate. When the pH of the acidic washing solution exceeds the range of the present invention, by-products are generated in the washed FePO₄, resulting in a positive (+) weight change rate.

### [Example II: Removal of impurities according to the pH of the solution containing Fe and P components after adding aqueous ammonia solution]

### Example 3

The same process as in Example 1 was performed, except that 50 mL of the solution containing Fe and P components was taken, and an aqueous ammonia solution having a molar concentration of 1 mol/L was continuously added at a rate of 1 mL/min while stirring at room temperature so that the pH of the solution reached 1.0, thereby precipitating impurities such as aluminum and titanium.

### Example 4

The same process as in Example 1 was performed, except that 50 mL of the solution containing Fe and P components was taken, and an aqueous ammonia solution having a molar concentration of 1 mol/L was continuously added at a rate of 1 mL/min while stirring at room temperature so that the pH of the solution reached 1.1, thereby precipitating impurities such as aluminum and titanium.

### Example 5

The same process as in Example 1 was performed, except that 50 mL of the solution containing Fe and P components was taken, and an aqueous ammonia solution having a molar concentration of 1 mol/L was continuously added at a rate of 1 mL/min while stirring at room temperature so that the pH of the solution reached 1.3, thereby precipitating impurities such as aluminum and titanium.

### Example 6

The same process as in Example 1 was performed, except that 50 mL of the solution containing Fe and P components was taken, and an aqueous ammonia solution having a molar concentration of 1 mol/L was continuously added at a rate of 1 mL/min while stirring at room temperature so that the pH of the solution reached 1.4, thereby precipitating impurities such as aluminum and titanium.

### [Test Example III: Measurement of removal rate of impurities, residual element content, and element content in final FePO₄]

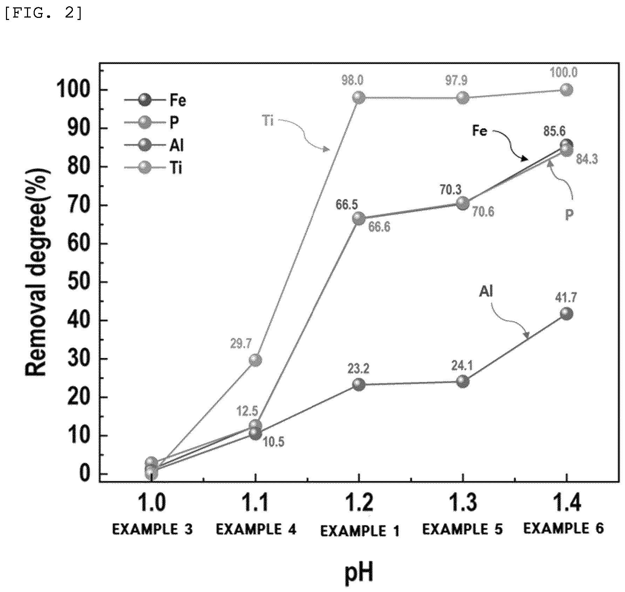

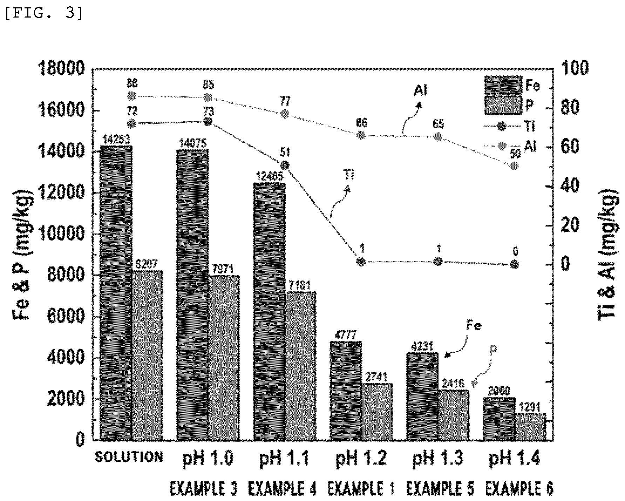

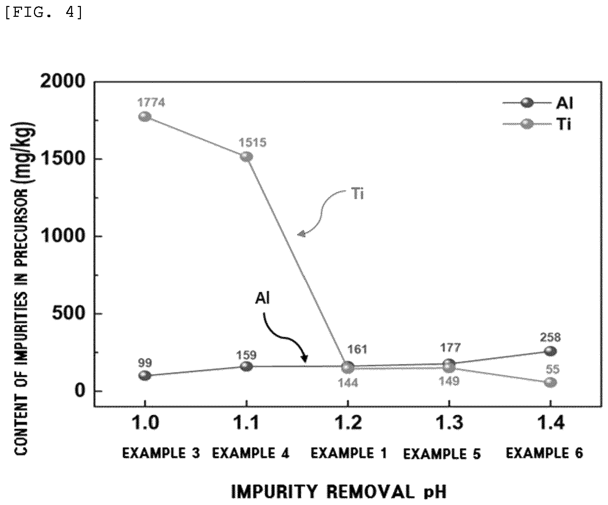

In Example 1 and Examples 3 to 6, the content of each element was measured through ICP analysis using the solution from which impurities were removed in the same manner as described above. The results are shown in FIGS. 2 and 3. Additionally, the Al and Ti contents of the final FePO₄ prepared in Example 1 and Examples 3 to 6 were measured through ICP analysis, and the results are shown in FIG. 4.

As shown in FIG. 2 below, impurities such as Al and Ti components were removed in the range where the pH of the solution containing Fe and P components, to which the aqueous ammonia solution was added, was 1.0 to 1.4 (Example 1 and Examples 3 to 6). In particular, it was confirmed that the removal rate of Al and Ti components was high at a pH of 1.2 or higher.

In addition, as shown in FIG. 3 below, the solutions from which impurities were removed in the range of pH 1.0 to 1.4 (Example 1 and Examples 3 to 6) had low contents of Al and Ti components. Specifically, at a pH of 1.2 or higher (Examples 1, 5, and 6), the contents of Al and Ti components were even lower. Through these results, it was confirmed that Al and Ti components were effectively removed by adjusting the pH of the solution containing Fe and P components to 1.2 to 1.4 by adding the aqueous ammonia solution. In the graph of FIG. 3, "solution" refers to the solution containing Fe and P components before adding the aqueous ammonia solution.

Furthermore, in FIGS. 2 and 3 below, at pH 1.2 to 1.4 (Examples 1, 5, and 6), not only the Al and Ti components but also the Fe and P components are precipitated and removed together. These Fe and P components may be recovered and reused by leaching the Fe and P components again in an acidic solution.

In addition, FIG. 4 below shows the measurement of the contents of Al and Ti components in the final FePO₄. As shown in FIG. 4, the synthesized FePO₄ (Example 1 and Examples 3 to 6) obtained after removing impurities from the solution containing Fe and P components by adding the aqueous ammonia solution had low contents of Al and Ti components. In particular, it was confirmed that the contents of Al and Ti components were even lower at a pH of 1.2 or higher (Examples 1, 5, and 6).

### [Example III: Al and Ti content in final FePO₄ according to the pH of the heated hydrogen peroxide mixture]

### Example 7

The same process as in Example 1 was performed, except that FePO₄ was synthesized by continuously adding an aqueous ammonia solution having a molar concentration of 1 mol/L to the heated hydrogen peroxide mixture at a rate of 0.1 mL/min so that the pH of the hydrogen peroxide mixture was maintained at 1.0.

### Example 8

The same process as in Example 1 was performed, except that FePO₄ was synthesized by continuously adding an aqueous ammonia solution having a molar concentration of 1 mol/L to the heated hydrogen peroxide mixture at a rate of 0.1 mL/min so that the pH of the hydrogen peroxide mixture was maintained at 1.1.

### Example 9

The same process as in Example 1 was performed, except that FePO₄ was synthesized by continuously adding an aqueous ammonia solution having a molar concentration of 1 mol/L to the heated hydrogen peroxide mixture at a rate of 0.1 mL/min so that the pH of the hydrogen peroxide mixture was maintained at 1.3.

### Example 10

The same process as in Example 1 was performed, except that FePO₄ was synthesized by continuously adding an aqueous ammonia solution having a molar concentration of 1 mol/L to the heated hydrogen peroxide mixture at a rate of 0.1 mL/min so that the pH of the hydrogen peroxide mixture was maintained at 1.4.

### Example 11

Waste lithium iron phosphate cathode was pulverized with a blender to separate a current collector. The waste lithium iron phosphate cathode, from which the current collector was separated, was sieved with a 200-mesh sieve to obtain waste cathode material powder having an olivine structure. As a result of X-ray diffraction (XRD) analysis of the obtained waste cathode material powder, the powder was confirmed to have an olivine structure.

100 g of the prepared waste cathode material powder was added to 1,000 mL of an aqueous sulfuric acid solution having a molar concentration of 0.6 mol/L at room temperature and leached to form a leachate containing dissolved lithium and a leaching residue. The leachate and the leaching residue were separated by reduced pressure filtration to obtain the leaching residue. The components such as Li, Fe, P, and S in the obtained leaching residue were measured through ICP analysis, and the results were the same as those in Example 1.

The obtained leaching residue was leached in an aqueous sulfuric acid solution having a molar concentration of 1 mol/L at room temperature at a solid-to-liquid ratio of 10 mL/g for 20 hours to obtain a solution containing Fe and P components. The solution contained 27,000 ppm of an Fe component and 15,000 ppm of a P component, which was confirmed through ICP analysis.

An aqueous hydrogen peroxide solution with a concentration of 30 % by weight was added to 50 mL of the solution in an amount of 0.6 % by volume of the solution based on hydrogen peroxide, and the temperature was increased to 30 °C to prepare a hydrogen peroxide mixture. At this time, the process was performed under stirring at 500 rpm.

An aqueous ammonia solution having a molar concentration of 1 mol/L was continuously added to the heated hydrogen peroxide mixture at a rate of 0.1 mL/min so that the pH of the mixture was maintained at 1.0, thereby synthesizing FePO₄. At this time, the mixture was stirred at 500 rpm.

The synthesized FePO₄ and the mixture were separated using reduced pressure filtration.

The separated FePO₄ was mixed with an acidic solution (washing solution) having a pH of 1.3 prepared with distilled water and hydrochloric acid, and the mixture was washed for 10 minutes by stirring at 500 rpm.

After the washing, the FePO₄ and the washing solution were separated using reduced pressure filtration to obtain washed FePO₄.

The washed FePO₄ was vacuum-dried at 80 °C to obtain the final FePO₄.

### Example 12

The same process as in Example 11 was performed, except that FePO₄ was synthesized by continuously adding an aqueous ammonia solution having a molar concentration of 1 mol/L to the heated hydrogen peroxide mixture at a rate of 0.1 mL/min so that the pH of the hydrogen peroxide mixture was maintained at 1.1.

### Example 13

The same process as in Example 11 was performed, except that FePO₄ was synthesized by continuously adding an aqueous ammonia solution having a molar concentration of 1 mol/L to the heated hydrogen peroxide mixture at a rate of 0.1 mL/min so that the pH of the hydrogen peroxide mixture was maintained at 1.2.

### Example 14

The same process as in Example 11 was performed, except that FePO₄ was synthesized by continuously adding an aqueous ammonia solution having a molar concentration of 1 mol/L to the heated hydrogen peroxide mixture at a rate of 0.1 mL/min so that the pH of the hydrogen peroxide mixture was maintained at 1.3.

### Example 15

The same process as in Example 11 was performed, except that FePO₄ was synthesized by continuously adding an aqueous ammonia solution having a molar concentration of 1 mol/L to the heated hydrogen peroxide mixture at a rate of 0.1 mL/min so that the pH of the hydrogen peroxide mixture was maintained at 1.4.

### [Test Example IV: Measurement of impurity content in final FePO₄]

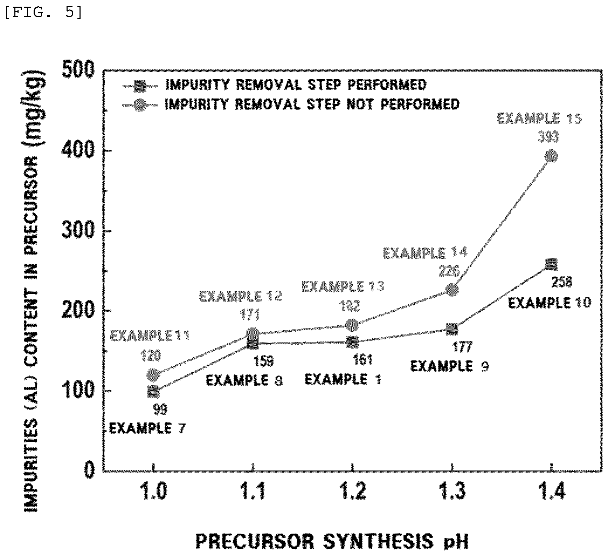

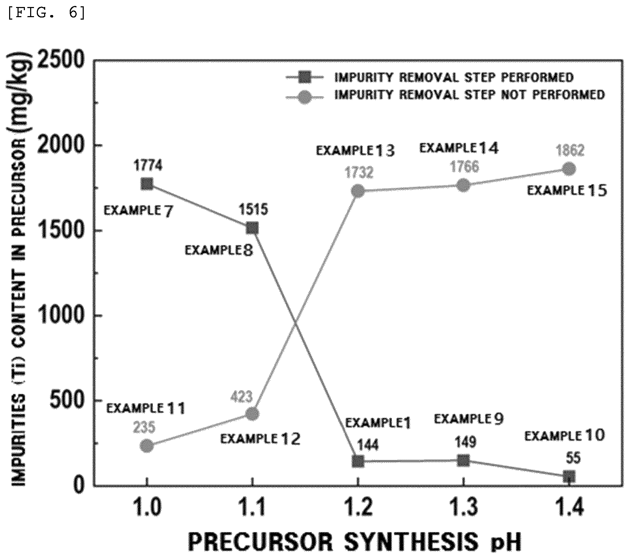

The Al and Ti contents in the final FePO₄ (Example 1 and Examples 7 to 10), prepared by performing the impurity removal step using the aqueous ammonia solution and varying the pH of the hydrogen peroxide mixture, and the Al and Ti contents in the final FePO₄ (Examples 11 to 15), prepared by varying the pH of the hydrogen peroxide mixture without performing the impurity removal step, were measured through ICP analysis. The results are shown in FIGS. 5 and 6.

As shown in FIG. 5 below, it was confirmed that in Example 1 and Examples 7 to 10, which underwent the impurity removal step using the aqueous ammonia solution, the Al content in the prepared final FePO₄ was further reduced compared to Examples 11 to 15, which did not undergo the impurity removal step. Furthermore, it was confirmed that the amount of Al inflow increased as the pH of the hydrogen peroxide mixture increased.

In addition, as shown in FIG. 6 below, in Example 1 and Examples 7 to 10, which underwent the impurity removal step using the aqueous ammonia solution, the Ti content was reduced as the pH increased. In particular, at a pH of 1.2 or higher (Examples 1, 9, and 10), the Ti content was significantly low. In addition, in Examples 11 to 15, which did not undergo the impurity removal step, the Ti content was low at a pH of less than 1.2, but the Ti content increased at a pH of 1.2 or higher.

## Claims

1. A method of preparing FePO₄ from waste lithium iron phosphate cathode, comprising:
(a) preparing a hydrogen peroxide mixture by adding an aqueous hydrogen peroxide solution to a solution containing Fe and P components;
(b) heating the hydrogen peroxide mixture;
(c) synthesizing FePO₄ by adding an aqueous ammonia solution to the heated hydrogen peroxide mixture;
(d) separating the synthesized FePO₄; and
(e) washing the separated FePO₄ with an acidic washing solution having a pH of 1.3 to 1.6.

2. The method according to claim 1, wherein the solution of step (a) has a pH of 0.1 to 0.5.

3. The method according to claim 1, wherein, in step (a), the aqueous hydrogen peroxide solution is added in an amount of 0.45 to 1.2 % by volume of the solution based on hydrogen peroxide.

4. The method according to claim 1, wherein, for the solution in step (a), the aqueous ammonia solution is added to the solution containing Fe and P components to precipitate impurities, and the impurities are removed.

5. The method according to claim 4, wherein, after the addition of the aqueous ammonia solution is completed, the solution containing Fe and P components has a pH of 1.0 to 1.4.

6. The method according to claim 1, wherein the solution of step (a) is prepared by comprising (i) obtaining waste cathode material powder by pulverizing and sieving waste lithium iron phosphate cathode; (ii) forming a leachate containing dissolved lithium and a leaching residue by adding the obtained waste cathode material powder to an acidic solution having a molar concentration of 0.5 to 0.7 mol/L, and separating the leachate and the leaching residue; and (iii) obtaining a solution containing Fe and P components by adding the separated leaching residue to an acidic solution having a molar concentration of 0.8 to 1.3 mol/L.

7. The method according to claim 1, wherein, in step (b), the hydrogen peroxide mixture is heated to 28 to 60 °C.

8. The method according to claim 1, wherein, in step (c), after the addition of the aqueous ammonia solution is completed, the heated hydrogen peroxide mixture has a pH of 1 to 2.

9. The method according to claim 1, wherein, in step (c), stirring is further performed for 30 to 60 minutes after the addition of the aqueous ammonia solution is completed.

10. The method according to claim 1, wherein, in step (c), the aqueous ammonia solution is continuously added.

11. The method according to claim 1, wherein, based on Equation 1 below, a weight change rate of the FePO₄ obtained in step (e) relative to the FePO₄ separated in step (d) is ±0.3% or less. [Equation 1] $Weight change rate \left(%\right) = \left[\left(A-B\right)/\left.A\right)\right] \times 100 ,$ wherein A is a weight of FePO₄ synthesized in step (d), and B is a weight of FePO₄ washed in step (e).

12. The method according to claim 1, wherein, in step (e), a solid-to-liquid ratio of the separated FePO₄ and the acidic washing solution having a pH of 1.3 to 1.6 is 15 to 25 mL/g.

13. The method according to claim 1, wherein, in step (e), the washing comprises adding the acidic washing solution and stirring for 5 to 20 minutes.

14. The method according to claim 1, wherein, in step (e), the washing comprises reduced pressure filtration.

15. The method according to claim 1, further comprising (f) drying the washed FePO₄.
